Europäisches Patentamt

European Patent Office

Office européen des brevets

(11) Publication number: 0 366 487 A2

# EUROPEAN PATENT APPLICATION

(21) Application number: 89311119.5

(51) Int. Cl.5: C08K 9/04 , C08F 292/00

(22) Date of filing: 27.10.89

Claim for the following Contracting State: ES

(30) Priority: 28.10.88 US 263689
02.12.88 US 279210

(43) Date of publication of application:
02.05.90 Bulletin 90/18

(84) Designated Contracting States:
AT BE CH DE ES FR GB GR IT LI LU NL SE

(71) Applicant: E.C.C. AMERICA INC.
5775 Peachtree-Dunwoody Road N.E. Suite 200 G
Atlanta Georgia 30342(US)

(72) Inventor: Rice, Camilla Arlyn
634 West Church Street
Sandersville Georgia 31082(US)

(74) Representative: Nash, David Allan et al
Haseltine Lake & Co. 28 Southampton
Buildings Chancery Lane
London WC2A 1AT(GB)

(54) Process and products in the surface modification of minerals in a reactive atmosphere.

(57) A method of producing a mineral such as calcium carbonate, glass fibers and layered lattice silicates which is surface modified with an organic material wherein said mineral in substantially dry, particulate form is contacted with an organic monomer, co-monomers or a prepolymer, and surface polymerization or reaction in situ on the mineral is carried out in the presence of gaseous carbon monoxide or carbon dioxide.

FIG.1

Fiber glass reacted with 11-Aminoundecanoic acid in CO

Wave number CM$^{-1}$

## Process and Products in the Surface Modification of Minerals in a Reactive Atmosphere

Background of the Invention

This invention relates generally to minerals such as calcium carbonate, glass fibers and siliceous minerals such as aluminosilicates and the like, and more specifically relates to a method for producing such a mineral which is surface modified with an organic material. The products comprise particles of the mineral, the surfaces of which are modified by a polymer.

This specification will at all times refer to "layered silicates." The layered silicates to which the invention is applicable are of the type which can be represented by the general formula $E_i M_x Si_y O_n(OH)_m$ where M is Al, Mg, or Fe, X = 2 to 6; y = 2 to 8, n = 2 to 20, m = 0 to 8, and $E_i$ is one or more exchangeable ions (K, Na, Mg, Ca, Ba, Fe, Li, etc.). These layered silicates will hereinafter in this specification be referred to as "layered lattice silicates".

It has been recognized that the surface treatment of substrates of the mineral or clay mineral type can be enhanced by carrying out the treatment with the use of hydrogen.

In one aspect, the reactants include organic compounds, polymer-forming compounds and the like and the reaction is carried out in the presence of hydrogen which activates or promotes the reaction, at elevated temperatures.

Since the reaction need only take place to a limited extent, viz., at the surface, without involving the bulk of the substrate, thus without problems of diffusion of reactants through already formed surface layers, such processes offer advantages in minimal consumption of materials and energy and in short reaction times as well as in providing a wide variety of structures at the surface. The products have advantages in possessing chemically modified surface properties making them useful for particular applications while retaining desirable physical properties of the bulk of the substrate.

Thus the surface treatment of a clay mineral such as kaolin with a polymerizable substance such as a nylon precursor may be carried out in the presence of a hydrogen at elevated temperatures to form a polymer in situ at the surface of the kaolin, the product being useful as a filler in resins, elastomers and the like. Such a product is particularly advantageous as a filler in a matrix with which the treated kaolin surface is compatible or to which it is similar whereby better adhesion is achieved between the two.

It has also been recognized that a layered lattice silicate may be surface modified by a gas which enters directly into the reaction, e.g., $NH_3$.

In this disclosure the term "surface modified" means that only the surface of the substrate is modified and no breakdown of its structure other than that normally associated with heating in the range set forth herein, occurs.

In my U.S. Patent No. 4,764,495, issued August 16, 1988, there is disclosed a method for producing a layered lattice silicate which is surface modified with an organic material, by pretreating the silicate such as a kaolin in a hydrogen atmosphere, and then reacting the product with a suitable organic compound.

In my U.S. Patent No. 4,789,403 there is disclosed a method for producing a layered lattice silicate which is surface modified with an organic material, by contacting the silicate such as a kaolin with an organic monomer, co-monomers, or a prepolymer, and effecting surface polymerization or reaction in situ in the presence of a gaseous hydrogen atmosphere. It is believed that the polyamide (nylon) type polymers grow from the surface of the mineral which results from the exposure of the mineral surface to nylon type monomers/ prepolymers; and that in the case of the other resins (ABS prepolymer, polybutadiene, polypropylene, polyethylene) the polymer resin is exposed to the mineral surface and becomes bonded to it.

In my U.S. Patent No. 4,859,718 there is disclosed a method for surface modifying with an organic material a carbonate such as calcium carbonate, which during processing has become coated with processing chemicals, wherein the carbonate in substantially dry, particulate form is contacted with an organic monomer, co-monomers or a prepolymer, in the presence of gaseous hydrogen and a calcined kaolin or $TiO_2$ as a polymerization initiation catalyst.

My U.S. Patent No. 4,690,868 teaches directly aminating the surface of a 2-dimensional layered lattice silicate comprising reacting the lattice silicate in particulate form with gaseous $NH_3$ at temperatures below $1000°$ C. to form bound $NH_2$ groups at the surface; the resulting modified 2-dimensional layered lattice silicate and a filled resin system employing the thusly modified silicate.

In my U.S. Patent No. 4,798,766 a method is described for producing a layered lattice silicate which is surface modified with an organic material, which comprises reacting a layered lattice silicate in particulate form with a reactant system comprising gaseous $NH_3$ at temperatures below about $1000°$ C. to form bound

2

$NH_2$ groups at said surface, and reacting the aminated silicate in particulate form in the presence of gaseous hydrogen with an organic compound selected from the class consisting of monomers, co-monomers, and prepolymers, which are condensible with the amine group.

An object of this invention is to make improvements in the surface treatment of minerals in the presence of an activating or promoter gas.

## Detailed Description

It has now been found that, as an improvement to using $H_2$ as a reactive atmosphere to initiate in situ polymerization and subsequent bonding of the formed polymer to a mineral surface, the reaction occurs more rapidly (at least five times faster) in the presence of CO with more surface bonds being formed. This new method has the advantage of time and efficiency over $H_2$-promoted reactions. Metacresol extraction and infrared analysis of the surface after extraction show that, where a nylon precursor is used, the nylon is bonded to the surface and bonding occurs through the CO sites in the amide.

Surprisingly it has been found that reactions in CO are extremely rapid compared with $H_2$, less than one minute being required to complete a reaction in CO that takes 15 to 20 minutes in $H_2$. Clearly this is a major improvement with respect to time, energy, economic use of equipment, manpower, etc.

Now in accordance with the present invention, the foregoing object, and others as will become apparent in the course of the ensuing specification, are achieved in a method of treating a mineral selected from the group consisting of metal carbonates, glass fibers and layered lattice silicates so that the mineral becomes surface modified with an organic material. The metal carbonate may be selected from the group consisting of calcium carbonate, magnesium carbonate and calcium-magnesium carbonate. According to the invention, the mineral substrate, which is in substantially dry particulate form, is contacted with an organic monomer, co-monomers, or a prepolymer, viz., not fully polymerized to its highest molecular weight range, and surface polymerization or reaction is effected in the presence of CO. The level of addition of the monomers/prepolymers may suitably be in the range of about 0.25 weight percent to about 10 weight percent based on the weight of the substrate. The starting material, which may be a layered lattice silicate as a refined kaolin, is initially thoroughly dried and blended with a solid or liquid monomer (or, as mentioned, co-monomers or a prepolymer), as for example, by milling of the dry kaolin and a dry monomer in a suitable mill, which may also be screened. The resulting powder is thereupon provided in a suitable reactor, which has previously been heated to an intermediate temperature, for example, 100° C. The reactor is flushed with nitrogen to remove residual oxygen and thereupon a flow of carbon monoxide is substituted for the nitrogen. The CO need not be pure and may contain inert constituents such as nitrogen, helium or argon. The CO may range from 100% to 10% in the mixture. Heat is then provided to increase the temperature to at least the melting point of the monomer, but insufficient to volatilize the monomer, while the CO-containing atmosphere is maintained. The temperature may range from about 110° C. to about 300° C. depending upon the organic system used.

It has also now been found that $CO_2$ may be used as a reactive atmosphere in a manner substantially similar to that described herein for CO. Mixtures of gases selected from the group consisting of $H_2$, CO and $CO_2$ may also be used.

The said reaction may be conducted in apparatus which provides good gas-solids contact, such as a rotary furnace. The said reaction may also be conducted in a fluidized bed reactor, with the gaseous components passing upwardly through a suitable diffuser plate, and into a fluidized bed of the particulate material being treated. Typical reaction times for CO are from 0.5 minutes to 30 minutes. Reaction times longer than 30 minutes cause discolored products and do not enhance the product characteristics. Reaction times are longer for $CO_2$ and are similar to those when $H_2$ is employed, e.g., may be as high as about 45 minutes.

Various layered lattice silicates, including minerals comprising same, may be treated by the method of the invention. Thus, for example, clays of the halloysite, illite, kaolinite, montmorillonite, palygorskite groups, talc and various other clays, can be readily treated by the present invention. Hydrous or calcined kaolins may be used. However, where hydrous kaolins are treated which as a result of aqueous processing with dispersants may have their sites which are activated by the CO or $CO_2$ covered as to render the kaolin inactive, a polymerization initiation catalyst, preferably a calcined kaolin or $TiO_2$, should be present where polymerization occurs from monomers. Minerals, e.g., calcium carbonate and glass fibers may also serve as substrate.

With respect to kaolin terminology, it is noted that the prior art literature, including numerous of the prior art patents relating to the field of kaolin products and processing, commonly uses the term "hydrous" to refer to a kaolin which has not been subjected to calcination -- more specifically, which has not been subjected to temperatures above about 450° C., which temperatures serve to alter the basic crystal structure of kaolin. These so-called "hydrous" clays may have been produced from crude kaolins, which have been subjected to beneficiation, as for example, to froth flotation, to magnetic separation, to mechanical delamination, or similar comminution, but not to the mentioned heating as would alter the crystal structure. The description of these materials as "hydrous" is actually somewhat inaccurate, since there is no molecular water actually present in the kaolinite structure. Thus, although the composition can be (and often is) arbitrarily written in the form $2H_2O.Al_2O_3.2SiO_2$, it is now well known that kaolinite is an aluminum hydroxide silicate of approximate composition $Al_2(OH)_4 Si_2O_5$ (which equates to the hydrated formula formula just cited). Once the kaolin is subjected to calcination, which, for the purposes of this specification means being subjected to heating of 450° C. or higher for a period which eliminates the hydroxyl groups, the crystalline structure of the kaolinite is destroyed. In any event, in order to maintain consistency with the prior art terminology, the terms "hydrous kaolin" and "calcined kaolins" are used in this specification in the commonly understood prior art senses just indicated.

It may further be noted that in many instances particulate calcium carbonate may be the product of "wet processing" or "wet grinding." U.S. Patent No. 3,980,240, for example, describes such a product by processing of a calcitic ore. In the procedure described in said patent, a dispersing agent is used during ball milling in order to facilitate grinding -- in this instance Dispex N40, a trademark of Allied Colloids for a sodium polyacrylate composition. By contrast, a dry ground or dry processed carbonate is one which has been ground in dry condition without the use of dispersants. Further discussion of dry ground and wet processed calcium carbonates may be found in U.S. Patent No. 3,604,634.

As is set forth in my U.S. Patent No. 4,859,718 where the carbonate has been subjected to wet processing, i.e., has been ground in an aqueous slurry containing a dispersing agent, a problem that arises is that the dispersing agent covers the active sites resulting from the use of hydrogen and renders the carbonate inactive. In that case an initiation catalyst is needed during the activation with hydrogen gas, viz., a minor amount, generally less than 1%, e.g., of the order of 0.25 to 0.5 weight percent based on the weight of the carbonate on a dry basis, of a calcined kaolin or titanium dioxide, the calcined kaolin being preferred. Similar conditions apply to the present invention, where the same polymerization initiation catalysts are appropriate where wet processed carbonates are treated pursuant to the invention, and where polymerization occurs from monomers.

It is known that glass fibers are used commercially to produce fabrics and insulation. When the starting material in this invention is glass fibers, they may be used as subdivided fibers, as the fibers themselves or as yarn or textiles comprising the glass fibers, for carrying out the surface treatment according to the invention.

Thus, Applicant has found that with the use of hydrogen or CO or $CO_2$, an effective, strong bonding of modifier to the mineral surface is achieved. Meta-cresol extraction of the modified minerals has confirmed the strong bonding at the surface (surface nylons were not removed by extraction in m-cresol for 2 hours).

A large variety of organic monomers may be used in the process of the invention: For example, E-caprolactum or alternatively 6-amino caproic acid, to produce nylon 6; hexamethylene diammonium adipate or the co-monomers hexamethylene diamine and adipic acid, to form nylon 6,6; the corresponding monomer from hexamethylene diamine and sebacic acid or the co-monomers, to form nylon 6,10; and the lactum of heptanoic acid to form nylon 7. It will be apparent that other monomers, co-monomers or prepolymers may be used to produce various nylon types. Acrylate such as methyl methacrylate may be used. In addition, other types of prepolymers (e.g. ABS (acrylonitrile-butadiene-styrene) prepolymer, hydrocarbon prepolymers such as polybutadiene, polypropylene, polyethylene) are capable of being reacted in situ on the mineral, to make the latter useful as fillers for polymer matrices, in particular matrices of the same polymer as that deposited on the mineral. Similarly, the in situ formed polymer need not be identical to the matrix polymer, provided that the two are compatible.

## Brief Description of the Drawings

Fig. 1 shows the infrared drift spectra for a sample of glass fibers reacted in accordance with the invention with 2% by weight of 11-aminoundecanoic acid in a $CO/N_2$ atmosphere;

Fig. 2 shows the infrared spectra for a sample of hydrous kaolin reacted in accordance with the invention with nylon 6,6-forming co-monomers, viz., hexanediamine and adipic acid;

Fig. 3 shows the reference infrared spectra known in the literature (taken from the Aldrich Library of Reference Spectra) for nylon 6,6 [poly(hexamethylene adipamide)] pellets; and

Fig. 4 shows a comparison of infrared drift spectra for a sample of Whitetex treated with 2% 11-aminoundecanoic acid for 45 minutes in 100% $CO_2$ and that sample after extraction with m-cresol for 2 hours.

The invention will now be illustrated by the Examples, which, however, are to be considered as merely exemplary of practice of the invention, and not as delimitive thereof.

## Example 1

A sample of Whitetex (a PRP [paint, rubber, plastic] grade calcined kaolin available from Engelhard Corporation) was mixed with 0.75% 11-aminoundecanoic acid. The mixture was screw fed into a rotary furnace heated to 200° C. (The furnace was operating at maximum tilt (3°) and rotation speed.) The sample was reacted in a 1:3 CO/$N_2$ atmosphere operating at a flow rate of 20 SCFH. The reacted product was characterized by drift spectra which revealed the formation of amide bonds in the 3400 cm$^{-1}$ and 1600 cm$^{-1}$ range. The product was extremely hydrophobic and would not disperse in water. (Whitetex is easily dispersed in water.)

## Example 2

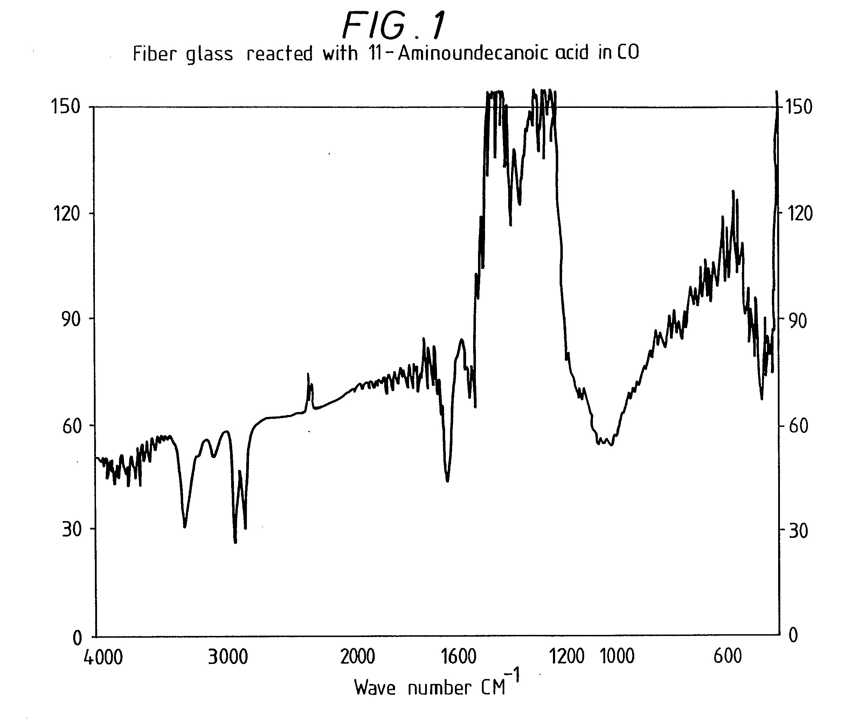

A sample of Dow Corning chopped fiber glass was mixed with 2% 11-aminoundecanoic acid and reacted for 10 minutes at 200° C. in a 1:3 CO/$N_2$ atmosphere in a vibrating fluid bed reactor fitted with a shaved screw diffuser plate. The infrared spectra of the reacted glass fibers exhibited amide bonds in the draft spectra indicative of the formation of nylon 11 on the glass surface, see Fig. 1.

## Example 3

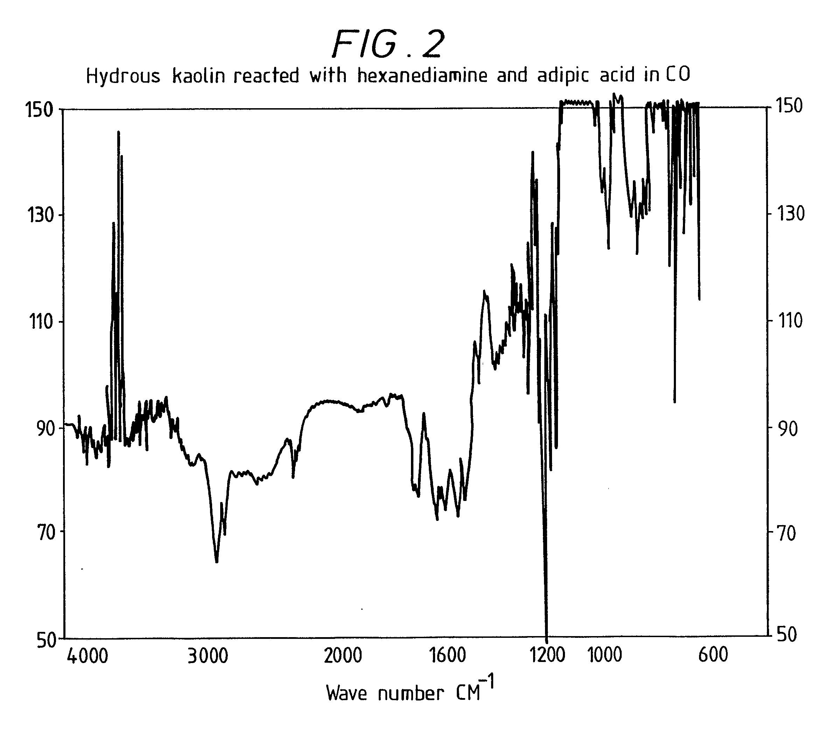

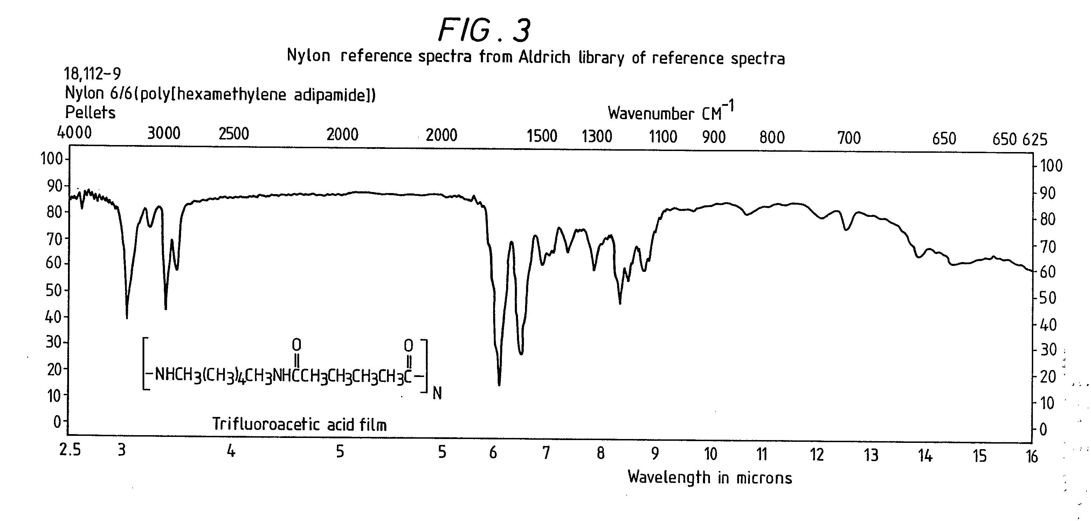

200 grams of dried (at 150° C. for 2 hours) hydrous kaolin, having a psd (particle size distribution) of 100% less than 1u, was milled with 0.6% adipic acid, 0.48% hexanediamine and 0.5% Cattex (a calcined kaolin catalyst available from Anglo-American Clays Corporation). The milled kaolin mixture was placed in a vibrating fluidized bed reactor heated to 150° C. The reactor was flushed with $N_2$ gas for 5 minutes to remove oxygen from the system. The temperature of the reactor was increased to 230° C. at which time carbon monoxide was added to the gas flow to achieve a 1:3 mixture of CO/$N_2$; the total flow rate was 15 SCFH. The reaction was allowed to continue for 10 minutes in the CO/$N_2$ environment. At the end of 10 minutes, the CO was discontinued and the reaction vessel cooled to room temperature. The surface treated product was removed and analyzed by infrared spectra analysis for the formation of amide bonds in the 3400 cm$^{-1}$ regions. Both sets were clearly visible, see attached infrared spectra of Fig. 2 and reference nylon spectra of Fig. 3.

In order to assess the nature of the surface, a small sample of the nylon 6,6 treated kaolin product was extracted for 2 hours, with stirring, in metacresol (metacresol will dissolve nylon that is coating the surface attached/bonded nylon). The product after metacresol extraction was washed with water and oven dried. IR analysis showed a decrease in the amide bonds but a large proportion of the nylon surface was intact. Analysis of the bond position of the carbonyl bond in the surface nylon showed a 20 cm$^{-1}$ shift from the carbonyl bond position of the reference nylon. This shift is indicative of surface bonding of the nylon through the carbonyl group in the amide. No shift was observed for the amine bond.

## Example 4

The starting material for this example was a commercially available calcined kaolin as described in Example 1 (i.e., Whitetex). The monomers in this instance comprised in total 1.5% by weight comprising .75% adipic acid and 0.75% 1,6 hexanediamine (purchased from Aldrich and used without further purification).

These monomers were thoroughly mixed into the calcined kaolin in a Micropulverizer® mill and screened during milling. The reaction mixture was placed in a storage hopper and screw fed into a rotary furnace operating at 245°C. in a $CO/N_2$ atmosphere. The $CO/N_2$ was passed at 5/15 SCFH flow rate. The material was exposed to the heat and reactive atmosphere for a total of 15 minutes from inlet to outlet.

The product that was removed from the outlet hopper was analyzed by C,N elemental analysis and drift spectroscopy; a 60 gram sample was extracted in m-cresol for 2 hours, washed free of the extract and analyzed by C,N elemental analysis and drift spectroscopy. The m-cresol extract was analyzed via GPC to determine the molecular weight of any nylon produced via this reaction but not bonded directly to the mineral surface.

These data are summarized in Table I. They confirm that the surface layer of nylon is bonded directly to the mineral surface, with subsequent layers merely hydrogen bonded to the surface layer.

The GPC analysis of the m-cresol extract confirmed that a polymerization reaction did indeed take place as a nylon 6,6 polymer of 32,000 molecular weight was produced from its monomers.

Drift analysis of the extracted surface indicated that the surface nylon is bound via the carbonyl group of the amide and not the amine group. (Carbonyl group is shifted 30cm$^{-1}$ down field whereas amine group shows no shift.)

Table I

| Whitetex + 1.5% (adipic acid + 1,6 hexanediamine) CO/245°C. 15 min. | |
|---|---|
| Elemental analysis (C,N) | |
| % nylon as reacted | 0.9% |
| % nylon after extraction | 0.6% |
| GPC analysis of m-cresol extract | 32,000 MW |

## Example 5

The starting mineral utilized in this reaction was the same as in Example 4, i.e., Whitetex, a calcined kaolin.

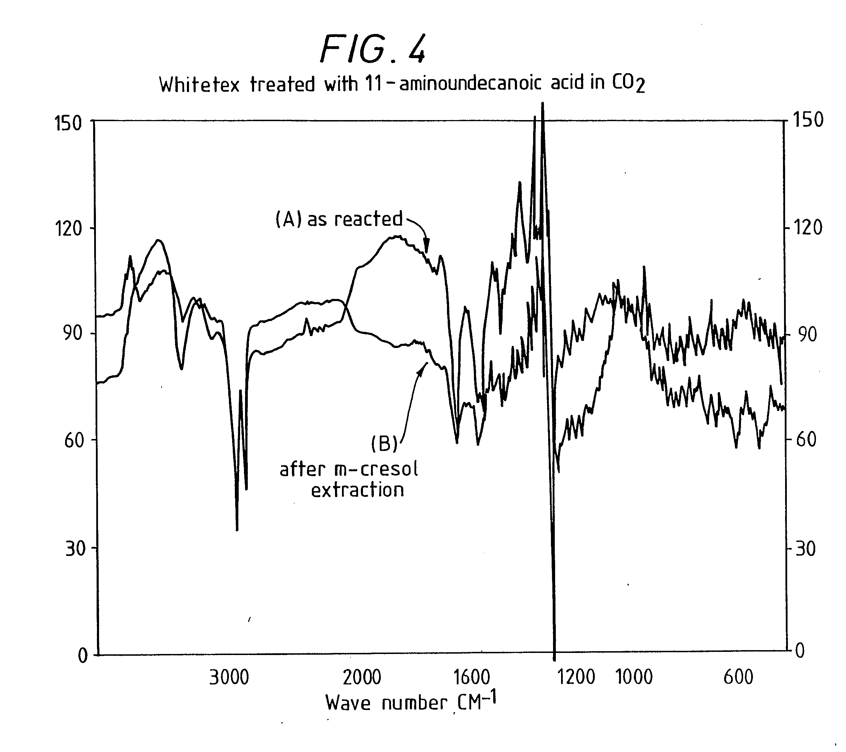

The dried calcined kaolin was milled in a Micro-pulzerizer® mill with 2% 11-aminoundecanoic acid. The uniform mixture was placed in a fluidized bed reactor, preheated to 100°C. The reactor was flushed for 2 minutes with nitrogen to exclude any residual oxygen, then the gas was switched to 100% carbon dioxide. The system was heated to 200°C. and reacted for 45 minutes. The heat was removed at the end of the reaction period and the system cooled in $N_2$. The product was removed and analyzed by drift spectroscopy. 60 grams of the surface modified mineral was extracted with m-cresol as described in Example 4. The sample after extraction was also analyzed via drift spectra. The spectra comparison as shown in Figure 4 illustrates that the surface layer is strongly bound to the mineral surface which shows that $CO_2$ can be used as a reactive atmosphere.

While the present invention has been particularly set forth in terms of specific embodiments thereof, it will be understood in view of the instant disclosure, that numerous variations upon the invention are now enabled to those skilled in the art, which variations yet reside within the scope of the present teaching. Accordingly, the invention is to be broadly construed, and limited only by the scope and spirit of the claims now appended hereto.

## Claims

1. A method of producing a mineral chosen from metal carbonates, glass fibers and layered lattice silicates which is surface modified with an organic material, wherein the mineral in substantially dry, particulate form is contacted with an organic monomer, co-monomers, or a prepolymer, in the presence of a gas chosen from carbon monoxide and carbon dioxide.

6

2. A method of producing a mineral chosen from metal carbonates, glass fibers and layered lattice silicates which is surface modified with an organic material, wherein the mineral in substantially dry, particulate form is contacted with an organic monomer, co-monomers, or a prepolymer, in the presence of gaseous carbon monoxide.

3. A method according to claim 1 or 2, wherein said mineral is chosen from glass fibres, a hydrous kaolin or a calcined kaolin, a mica, a talc, a bentonite or a calcium carbonate.

4. A method in accordance with claim 1, 2 or 3, in which said mineral is a hydrous kaolin and an initiation catalyst is present.

5. A method in accordance with any preceding claim, in which said mineral is a metal carbonate which during its prior processing has become coated with processing chemicals; and wherein the contact with said gas is in the presence of a calcined kaolin or $TiO_2$ as a polymerization initiation catalyst.

6. A method in accordance with any one of claims 1 to 5, in which a prepolymer of acrylonitrile/butadiene/styrene is used.

7. A method in accordance with any one of claims 1 to 5, in which a monomer selected from the group consisting of 6-amino caproic acid, E-caprolactam and 11-amino-undecanoic acid is used.

8. A method in accordance with any one of claims 1 to 5, in which co-monomers comprising hexamethylene diamine and adipic acid are used.

9. A method in accordance with any one of claims 1 to 8, in which the gas is carbon monoxide which is diluted with an inert gas and the mixture contains at least 10% carbon monoxide.

10. A method of producing glass fibers which are surface modified with an organic material, wherein the fibers are contacted with an organic monomer, co-monomers, or a prepolymer in the presence of a gas selected from the group consisting of carbon monoxide and carbon dioxide.

11. A particulate mineral chosen from metal carbonates, glass fibers and layered lattice silicates comprising particles of said mineral, the surfaces of which have been modified by a polymer synthesized in situ in the presence of a gas selected from the group consisting of carbon monoxide and carbon dioxide or by reacting a prepolymer in situ on the mineral in the presence of said gas.

12. A particulate mineral chosen from metal carbonates, glass fibers and layered lattice silicates comprising particles of said mineral, the surfaces of which have been modified by a polymer synthesized in situ in the presence of gaseous carbon monoxide or by reacting a prepolymer in situ on the mineral in the presence of gaseous carbon monoxide.

13. A particulate mineral according to claim 11 or 12, wherein said mineral is chosen from glass fibres, a hydrous kaolin or a calcined kaolin, a mica, a talc, a bentonite or a calcium carbonate.

14. A composition comprising a filled polymer system comprising a matrix polymer and a surface-modified particulate mineral filler in accordance with claim 11, 12 or 13.

15. A composition according to claim 14 in which the in situ synthesized polymer is essentially the same as the matrix polymer.

16. A composition according to claim 14 or 15, in which the in situ synthesized polymer is compatible with the matrix polymer.

17. A composition according to claim 14, 15 or 16, in which the in situ synthesized polymer is a polyamide.

18. A composition comprising a filled polymer system comprising a matrix polymer and a filler, said filler comprising particles of a mineral selected from the group consisting of metal carbonates, glass fibers and layered lattice silicates the surfaces of which have been modified by reacting a prepolymer in situ on the mineral in the presence of a gas selected from the group consisting of carbon monoxide and carbon dioxide.

19. A method in accordance with any one of claims 1 to 10, in which a mixture of gases selected from the group consisting of $H_2$, CO and $CO_2$ is used.

Claims for the following Contracting State: ES

1. A method of producing a mineral chosen from metal carbonates, glass fibers and layered lattice silicates which is surface modified with an organic material, wherein the mineral in substantially dry, particulate form is contacted with an organic monomer, co-monomers, or a prepolymer, in the presence of a gas chosen from carbon monoxide and carbon dioxide.

2. A method of producing a mineral chosen from metal carbonates, glass fibers and layered lattice silicates which is surface modified with an organic material, wherein the mineral in substantially dry, particulate form is contacted with an organic monomer, co-monomers, or a prepolymer, in the presence of gaseous carbon monoxide.

3. A method according to claim 1 or 2, wherein said mineral is chosen from glass fibres, a hydrous kaolin or a calcined kaolin, a mica, a talc, a bentonite or a calcium carbonate.

4. A method in accordance with claim 1, 2 or 3, in which said mineral is a hydrous kaolin and an initiation catalyst is present.

5. A method in accordance with any preceding claim, in which said mineral is a metal carbonate which during its prior processing has become coated with processing chemicals; and wherein the contact with said gas is in the presence of a calcined kaolin or $TiO_2$ as a polymerization initiation catalyst.

6. A method in accordance with any one of claims 1 to 5, in which a prepolymer of acrylonitrile/butadiene/styrene is used.

7. A method in accordance with any one of claims 1 to 5, in which a monomer selected from the group consisting of 6-amino caproic acid, E-caprolactam and 11-amino-undecanoic acid is used.

8. A method in accordance with any one of claims 1 to 5, in which co-monomers comprising hexamethylene diamine and adipic acid are used.

9. A method in accordance with any one of claims 1 to 8, in which the gas is carbon monoxide which is diluted with an inert gas and the mixture contains at least 10% carbon monoxide.

10. A method of producing glass fibers which are surface modified with an organic material, wherein the fibers are contacted with an organic monomer, co-monomers, or a prepolymer in the presence of a gas selected from the group consisting of carbon monoxide and carbon dioxide.

11. A method of producing a particulate mineral chosen from metal carbonates, glass fibers and layered lattice silicates comprising particles of said mineral, the surfaces of which have been modified by a polymer, comprising the step of synthesizing the polymer in situ in the presence of a gas selected from the group consisting of carbon monoxide and carbon dioxide or reacting a prepolymer in situ on the mineral in the presence of said gas.

12. A method of producing a particulate mineral chosen from metal carbonates, glass fibers and layered lattice silicates comprising particles of said mineral, the surfaces of which have been modified by a polymer, comprising the step of synthesizing the polymer in situ in the presence of gaseous carbon monoxide or reacting a prepolymer in situ on the mineral in the presence of gaseous carbon monoxide.

13. A method according to claim 11 or 12. wherein said mineral is chosen from glass fibres, a hydrous kaolin or a calcined kaolin, a mica, a talc, a bentonite or a calcium carbonate.

14. A method of preparing a filled polymer system comprising the step of combining a matrix polymer and a surface-modified particulate mineral filler prepared by a process in accordance with claim 11, 12 or 13.

15. A composition according to claim 14 in which the in situ synthesized polymer is essentially the same as the matrix polymer.

16. A method according to claim 14 or 15, in which the in situ synthesized polymer is compatible with the matrix polymer.

17. A method according to claim 14, 15 or 16, in which the in situ synthesized polymer is a polyamide.

18. A method of preparing a composition comprising a filled polymer system, comprising the step of combining a matrix polymer and a filler, said filler comprising particles of a mineral selected from the group consisting of metal carbonates, glass fibers and layered lattice silicates the surfaces of which have been modified by reacting a prepolymer in situ on the mineral in the presence of a gas selected from the group consisting of carbon monoxide and carbon dioxide.

19. A method in accordance with any preceding claim, in which a mixture of gases selected from the group consisting of $H_2$, CO and $CO_2$ is used.

# FIG .1
Fiber glass reacted with 11-Aminoundecanoic acid in CO

Wave number CM$^{-1}$

EP 0 366 487 A2

## FIG.2

Hydrous kaolin reacted with hexanediamine and adipic acid in CO

## FIG. 3

Nylon reference spectra from Aldrich library of reference spectra

18,112-9
Nylon 6/6(poly[hexamethylene adipamide])
Pellets

Wavenumber CM$^{-1}$

Wavelength in microns

Trifluoroacetic acid film

EP 0 366 487 A2

# FIG. 4

Whitetex treated with 11-aminoundecanoic acid in $CO_2$

(A) as reacted

(B) after m-cresol extraction

Wave number $CM^{-1}$

EP 0 366 487 A2